# FASCICULE DE BREVET EUROPEEN

(11) **EP 3 775 668 B1**
(45) Date de publication et mention de la délivrance du brevet: **20.11.2024**
(21) Numéro de dépôt: 19715167.3
(22) Date de dépôt: 07.03.2019
(51) Int. Cl.: F17C 11/00, B01D 53/04, C01B 3/00

(54) **PROCEDE DE PRODUCTION D'UN FLUX GAZEUX METTANT EN OUVRE UN RESERVOIR DE STOCKAGE**
VERFAHREN ZUR HERSTELLUNG EINES GASSTROMS MIT EINEM SPEICHERTANK
METHOD FOR PRODUCING A GASEOUS FLOW USING A STORAGE TANK

(30) Priorité: 30.03.2018 FR 1852831
(43) Date de publication de la demande: 17.02.2021
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: MONEREAU, Christian, 34000 Montpellier (FR); FRIMAT, David, 92220 Bagneux (FR); GUERET, Vincent, 94503 Champigny-Sur-Marne (FR); PETIT, Pierre Louis, 91370 Verrieres le Buisson (FR)
(74) Mandataire: Air Liquide
(86) Numéro de dépôt international: PCT/FR2019/050513
(87) Numéro de publication internationale: WO 2019/186008

(56) Documents cités:
- DE-A1- 10 110 169
- DE-A1- 102008 007 557
- FR-A1- 2 411 626
- FR-A1- 3 010 401
- US-A1- 2007 214 830
- US-A1- 2012 255 637
- US-A1- 2017 239 611
- US-A1- 2017 341 936

## Description

La présente invention est relative à un procédé de production d'un flux gazeux épuré mettant en oeuvre une unité de production d'un flux gazeux et un réservoir de stockage. De très nombreuses applications requièrent la mise en oeuvre de stockage momentané de gaz. C'est en particulier le cas chaque fois que la production ou l'utilisation d'un flux gazeux n'est pas constante et d'égale valeur. Les gazomètres de gaz de ville en sont un exemple. La production de gaz est quasi continue alors que la consommation varie énormément dans la journée.

Le fait de vouloir conserver un volume de gaz par sécurité, par exemple en cas d'incident sur l'unité de production, conduit également à utiliser des réservoirs de taille plus ou moins importante. L'arrêt brutal d'un four par manque d'oxygène pourrait avoir des conséquences très lourdes pour les équipements ou l'environnement (four à verre, incinérateur, four à métaux...). Un stockage suffisant est généralement prévu pour permettre un arrêt contrôlé de l'unité ou le passage en marche dégradée avec un comburant de secours (air...).

Des interruptions nécessaires dans la chaîne allant de la production à l'utilisation finale nécessitent également l'utilisation de réservoirs. La distribution de gaz sous pression par véhicule par exemple va généralement demander un premier stockage au lieu de chargement et un second stockage au lieu de livraison. La publication DE 10 2008 007557 A1 décrit un concept de stockage de gaz avec une étape de purification par adsorption en amont du réservoir de stockage et l'utilisation du gaz sortant du réservoir comme gaz de purge dans l'unité de purification.

Dans la majorité des cas où le gaz stocké est préalablement épuré, c'est-à-dire que sa composition est compatible avec la spécification en teneur correspondant à son utilisation, il est fait en sorte que le réservoir n'introduise pas de constituants en quantité telle que cela implique la nécessité d'installer une épuration finale complémentaire. Par réservoir, on entend la totalité de la fonction de stockage / déstockage. En effet, une pollution éventuelle du gaz stocké peut venir du réservoir lui-même comme on le montrera ci-dessous mais aussi des équipements annexes nécessaire au bon fonctionnement. Il va s'agir d'instrumentation pour mesurer par exemple la pression, la température, le volume utilisé par rapport au volume utile maximal (gazomètre...), la composition, les quantités entrantes et sortantes..., d'organes de sécurité tels des soupapes, des organes d'isolement ou de régulation de débit (vannes, clapets...). Des machines peuvent faire également partie de la fonction stockage (compresseur pour le gaz, pompe pour injection d'eau...). Tous ces éléments peuvent être la cause d'entrée de polluants, essentiellement des gaz atmosphériques, par exemple par rétro diffusion.

La pollution venant du stockage lui-même peut avoir différente origine. Il peut s'agir de la désorption d'un constituant adsorbé sur la paroi interne du réservoir. Normalement ce type de pollution disparait après un certain temps de fonctionnement mais certains phénomènes peuvent nécessiter d'y porter une plus grande attention. Les impuretés peuvent par exemple être introduites par le gaz d'alimentation lui-même mais à une teneur infime compatible avec la spécification finale du produit. Cette impureté peut avoir tendance à s'adsorber sur la paroi du réservoir en particulier lorsque la température du réservoir est la plus froide. Un réchauffement soudain va conduire à une désorption rapide et à concentrer les impuretés dans le gaz. Un stockage en climat continental ou désertique peut ainsi créer dans le gaz en sortie du réservoir des pics momentanés d'humidité de 10 à 100 fois supérieurs à la teneur moyenne et ce, lorsque le soleil du matin réchauffe brutalement le réservoir.

Plus classiquement, il peut s'agir de diffusion à travers la paroi de constituants présents à l'extérieur du réservoir. Pour les baudruches, gazomètres, cela sera essentiellement du CO2 et de l'humidité qui diffusent particulièrement bien à travers une majorité de polymères. Dans les stockages souterrains, on va pouvoir introduire de l'humidité, du CO2, du méthane, de l'H2S....suivant la géologie locale.

Le système d'étanchéité des gazomètres s'il est du type à joint liquide peut également introduire des traces d'impuretés (eau, alcools...) en fonction de la nature du fluide utilisé. Il peut également introduire des traces d'hydrocarbures lourds si l'étanchéité est du type "à graisse".

Enfin, dans les stockages souterrains, on a vu que l'on pouvait utiliser un fluide d'appoint pour aider au remplissage ou à l'extraction du gaz. On pourra alors suivant le cas introduire de l'eau, du CO2 ou de l'azote dans le gaz du réservoir.

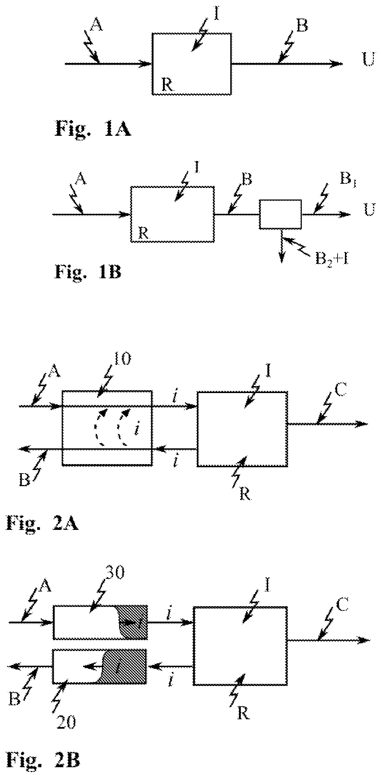

Actuellement, on est donc dans une des deux situations schématisées dans la Figure 1.

Le flux gazeux B extrait du réservoir R est de teneur conforme à la spécification requise pour son utilisation et est directement envoyé vers l'utilisateur U. (cf. Fig. 1.a). Cela signifie que compte tenu des caractéristiques du flux d'alimentation A, en particulier sa pureté et son débit, la quantité d'impuretés I introduites est suffisamment faible pour que le produit en sortie soit toujours compatible avec la spécification de l'utilisateur. C'est souvent le cas d'un stockage parfaitement étanche comme par exemple une capacité en acier inoxydable utilisée sous pression.

Inversement, lorsque le flux gazeux B n'est pas à la spécification requise pour son utilisation et on met en oeuvre une unité additionnelle d'épuration pour éliminer les impuretés inadmissibles (cf. Fig. 1.b). Cette épuration peut être de type divers (réacteur de catalyse, piège chimique, unité de purification par adsorption, absorption ou perméation...). Une telle unité va être généralement coûteuse en investissement, en frais opératoires et consommer du gaz diminuant ainsi le rendement global de production. En effet, dans les procédés les plus utilisés pour cette épuration finale, comme l'adsorption, il est généralement difficile d'extraire uniquement les impuretés mais leur évacuation se fait au contraire via un résiduaire contenant également des composés valorisables.

Partant de là, un problème qui se pose est de fournir un procédé amélioré de production dans lequel la pollution provenant du réservoir de stockage est limitée.
Une solution de la présente invention est un procédé de production d'un flux gazeux épuré B' mettant en oeuvre une unité de production d'un flux gazeux et un réservoir de stockage R comprenant des impuretés I, comprenant les étapes suivantes :
a) production d'un flux gazeux A au moyen de l'unité de production,
b) stockage d'au moins une partie du flux gazeux A dans le réservoir R,
c) extraction du réservoir R d'un flux gazeux B correspondant à au moins une partie du flux A polluée par les impuretés I issues du réservoir de stockage R,
d) épuration du flux gazeux B par transfert d'au moins une partie des impuretés I comprises dans le flux gazeux B dans le flux gazeux A, et
e) récupération en sortie de l'épuration d'un flux gazeux épuré B',
le procédé comprenant une étape d'extraction d'un flux gazeux C du réservoir de stockage R.

Selon le cas le procédé selon l'invention peut présenter une ou plusieurs des caractéristiques suivantes :
- le flux gazeux C peut comprendre jusqu'à la totalité des impuretés issues du réservoir de stockage R. Il convient en effet qu'il n'y ait pas accumulation sans fin d'impuretés i dans le réservoir. Dans le cas le plus favorable, il y a une limite naturelle à l'accumulation et la teneur en impuretés ne peut pas dépasser une valeur maximale. C'est le cas par exemple si on atteint la saturation de la phase gazeuse ou s'il n'y a plus de force motrice pour générer un flux de diffusion d'impuretés. Dans cette hypothèse, il n'y a théoriquement pas besoin d'une purge, c'est-à-dire d'une seconde fraction sortant du réservoir R, chargée quant à elle en impuretés i pour limiter l'accumulation des impuretés.

Le cas extrême opposé correspond à un réservoir dans lequel le flux d'impuretés serait constant quelle que soit la composition du gaz à l'intérieur. On peut imaginer une micro-fuite de gaz de barrage sous pression par exemple. Si on épure totalement le flux B, toutes les impuretés vont se retrouver dans le flux C. Le ratio entre les flux B et C donnera la teneur en impuretés du flux C.
- le réservoir de stockage R est un réservoir de stockage aérien ou un réservoir de stockage souterrain, naturel ou artificiel.
- le réservoir de stockage aérien est un réservoir à volume constant et pression variable ou un réservoir à volume variable et pression constante.
- les impuretés I comprises dans le réservoir de stockage R sont situées sur les parois dudit réservoir et/ou dans le système d'étanchéité dudit réservoir et/ou dans des équipements complémentaires associés au réservoir.
- l'épuration de l'étape d) est réalisée par adsorption, absorption ou perméation.
- l'épuration de l'étape d) est réalisée par adsorption au moyen d'au moins une masse adsorbante et comprend deux sous-étapes : une première sous-étape i) comprenant le passage à co-courant du flux gazeux B à travers la masse adsorbante de manière à éliminer au moins une partie des impuretés I comprises dans le flux gazeux B, et une deuxième sous-étape ii) comprenant le passage à contre-courant du flux gazeux A à travers la masse adsorbante issue de la première sous-étape i) de manière à désorber au moins une partie des impuretés I.
- la différence de température d'entrée des flux gazeux A et B dans la masse absorbante est inférieure à 50°C, préférentiellement inférieure à 20°C.
- le débit volumique du flux gazeux B représente moins de 90%, préférentiellement moins de 65%, encore plus préférentiellement moins de 50% du débit volumique du flux gazeux A.
- une seule masse adsorbante est utilisée à l'étape d) et subit alternativement le passage des flux gazeux A et B ; et le flux gazeux B est discontinu de manière à n'avoir aucune extraction d'un flux gazeux B du réservoir R lorsque la masse adsorbante subit le passage du flux gazeux A.
- le flux gazeux A est discontinu de manière à n'avoir aucun stockage du flux gazeux A dans le réservoir R lorsque la masse adsorbante subit le passage du flux gazeux B.
- le flux gazeux A comprend au moins 50% d'hydrogène ou d'hélium et le réservoir R est un réservoir de stockage aérien à volume constant ou un réservoir de stockage souterrain.
- le flux gazeux A comprend au moins 50% d'oxygène issu d'au moins un adsorbeur d'une unité de séparation des gaz de l'air par adsorption ; le flux gazeux B permet de régénérer, préférentiellement de recomprimer au moins un adsorbeur de ladite unité de séparation des gaz de l'air; et le flux gazeux C constitue le flux de production enrichi en oxygène de ladite unité de séparation des gaz de l'air et comprend les impuretés I issues du réservoir de stockage. En effet, on conçoit que dans ce cas, le flux de production enrichi en oxygène comprend les impuretés introduites au niveau du réservoir de stockage. On reviendra sur ce point en fin de ce paragraphe puis dans le second exemple.
- l'épuration de l'étape d) est réalisée par adsorption au moyen d'une masse adsorbante et comprend deux sous-étapes : une première sous-étape i) comprenant le passage à co-courant du flux gazeux B à travers la masse adsorbante de manière à éliminer au moins une partie des impuretés I comprises dans le flux gazeux B, et une deuxième sous-étape ii) comprenant le passage à contre-courant du flux gazeux A à travers la masse adsorbante issue de la première sous-étape i) de manière à désorber au moins une partie des impuretés I ; avec la masse adsorbante comprenant de l'alumine activée et/ou du gel de silice et/ou une zéolite.
- les impuretés I sont essentiellement de l'eau et/ou du dioxyde de carbone.

Il convient de noter ici que quelques ppm (parties par million) d'eau ou de dioxyde de carbone n'ont très généralement aucun impact lors de l'utilisation ultérieure du flux enrichi en oxygène. Par contre, si ces mêmes impuretés étaient mises au contact de l'adsorbant assurant la séparation O2/N2, en particulier une zéolite telle par exemple une zéolite de type X échangée au lithium, elles modifieraient considérablement ses caractéristiques d'adsorption jusqu'à les rendre inefficaces pour le procédé envisagé.

Les réservoirs de stockage, utilisés dans le cadre de l'invention, sont de tout type et de toutes dimensions. Une majorité est métallique, en aluminium ou en acier. Ils conviennent pour stocker des gaz sous une pression allant généralement de la pression atmosphérique jusqu'à plusieurs centaines de bars. Il peut s'agir de bouteilles de quelques litres, de capacités de quelques m3 à plusieurs centaines, voire milliers de m3. Ils peuvent être sphériques, cylindriques, constitués par des kilomètres de tuyauterie....

On trouve des stockages en matériaux composites, des stockages en béton dont les parois internes sont généralement recouvertes d'un enduit pour améliorer l'étanchéité, en matière plastique (polymères)... Ces deux derniers types de réservoirs sont généralement réservés à des stockages à basse pression (quelques bars).

Ces réservoirs de stockage sont à volume constant et le stockage/déstockage de gaz se fait par variation de pression
Il existe également des réservoirs à volume variable et à pression quasi constante, en particulier proche de la pression atmosphérique. Dans cette famille, on trouve les ballons, baudruches, gazomètres. On emploiera généralement le mot Gazomètre pour se référer à cette famille de stockage à volume variable. Le volume de ces réservoirs va de quelques litres à plusieurs milliers de m3. A côté des gazomètres de gaz de ville déjà cités, on trouve de tels stockages dans les unités de production de biogaz, pour recueillir les gaz basse pression issus de PSA divers (gaz riche en CO2 des PSA de déballastage en CO2, résiduaire des PSA hydrogène...). Il existe divers types de gazomètres tels ceux à colonnes, à spirale, télescopiques, secs... Plus récemment, ont été développés des gazomètres à membrane, simple ou double. Dans ce dernier cas, la membrane extérieure assure une bonne résistance aux conditions extérieures (vent, froid, chaud, pluie, neige...) alors que la membrane interne est choisie pour sa compatibilité avec le gaz à stocker. De taille moindre, les baudruches servent en particulier à recueillir de petites quantités de gaz rares utilisés dans divers procédé (hélium, xénon, krypton...). Ces gaz sont ensuite recyclés.

Un autre type de stockage de gaz correspond aux réservoirs souterrains. Il s'agit généralement là de réservoirs gigantesques de plusieurs milliers de m3. Ce sont soit des stockages naturels (ancien réservoir de méthane, ancien gisement d'hydrocarbures, nappe aquifère ..., cavités géologiquement quasi étanches...) soit des stockages artificiels (anciennes galeries de mine, cavité obtenue par lessivage et dissolution du sel...). Ils sont utilisés pour le gaz naturel, l'hydrogène et récemment pour l'hélium. Il s'agit de réservoir à volume et/ou pression variable. En effet, un autre fluide peut servir à repousser le gaz stockés (azote, eau...). La pression de stockage est alors comprise entre quelques dizaines et quelques centaines de bars.

Dans le cas où l'on extrait également un flux gazeux C, ce dernier peut être utilisé tel quel ou traité dans une unité aval suivant les besoins.

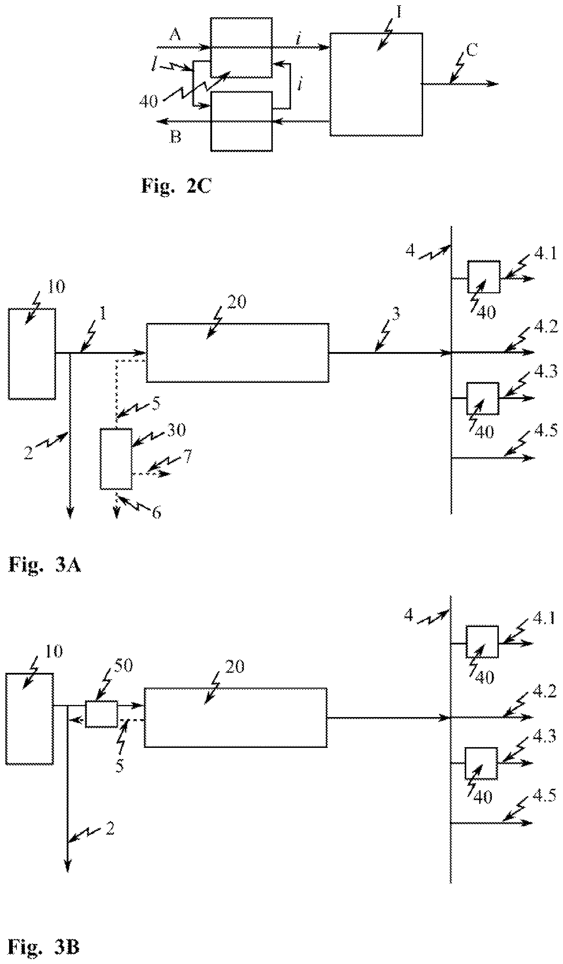

De façon préférentielle, le transfert des impuretés du flux B vers le flux A se réalise par un procédé simple utilisant le fait que le gaz d'alimentation est exempt - ou contient à une moindre teneur- les impuretés I en provenance du stockage. Le procédé en question sera choisi en fonction des conditions opératoires (pression, température, débits, variation dans le temps de ces paramètres...) et de la spécification de pureté du flux B en vue de son utilisation dans une unité aval. La perméation (Fig. 2.a) et/ou l'adsorption (Fig. 2.b) sont parfaitement adaptées pour réaliser ce transfert. Dans la Fig. 2.a, l'unité de perméation 10 est de type à élution. Le gaz A étant initialement exempt des impuretés I, il est théoriquement possible de retirer la totalité des impuretés I du flux B. Une membrane téflon par exemple pourra avantageusement éliminer l'humidité qui aurait pollué le flux B via le réservoir. Il convient de noter que les flux A et B ayant, aux impuretés près, la même composition, il n'y aura pas ou peu de transfert d'autres constituants de A vers B ou de B vers A. Cela sera vrai pour tout type de composition de la membrane du perméateur dès lors que les flux A et B sont à la même pression. Sinon, il convient de choisir pour le perméateur une membrane adaptée pour éviter la perméation non désirée des constituants valorisés. Dans le cas général, on extraira un flux C contenant les impuretés. On notera que cette solution très simple ne fonctionne que si le réservoir est alimenté par le flux A simultanément à l'extraction du flux B. Le perméateur sera d'autant plus performant que le flux B sera faible devant le flux A. Les impuretés seront alors fortement diluées dans A créant une force motrice importante pour leur transfert.

La présente invention va être décrite plus en détail à l'aide des figures 2 à 4.

Dans la figure 2.b, on a représenté une masse adsorbante 20 qui retient les impuretés I du flux B. Au fil du temps, le front d'impuretés progresse vers la sortie. Le flux A de son côté régénère la masse adsorbante 30 en repoussant les impuretés vers le réservoir. On conçoit qu'en alternant les masses adsorbantes entre les flux B et A, on puisse produire un flux B épuré. Un tel système n'impose plus que les flux A et B soient simultanés et offre quelques degrés de liberté. Il faut cependant que le flux A puisse extraire la totalité des impuretés du flux B arrêtées dans la masse adsorbante. L'homme de l'art sait déterminer les conditions nécessaires à une telle régénération. A température constante par exemple, il convient que la quantité de m³ réels de flux A que l'on fait passer à travers l'adsorbant soit supérieure à la quantité de m³ réels de flux B passée à contre-courant. A pression quasi égale pour les deux flux gazeux (par exemple pression du réservoir aux pertes de charge près), on pourrait en théorie épurer ainsi un flux gazeux B représentant environ 90% volume du flux A, mais en pratique un pourcentage moindre conduira à une unité plus efficace.

Il est également possible d'utiliser un procédé par absorption 40, en d'autres termes un lavage en boucle fermée, le liquide de lavage I du flux B étant régénéré par le flux A. Ce dernier procédé peut avoir l'inconvénient d'introduire dans le système le (ou les) constituants servant au lavage (cf. Figure 2.C).

Il convient de noter que le procédé proposé est différent d'une épuration classique au moyen de laquelle on extrait une impureté pour la rejeter à l'extérieur du système. Ici, on transfère les impuretés dans le gaz d'alimentation du réservoir en profitant du fait qu'il en est lui-même exempt ou qu'il en contient en faible quantité. On n'a ainsi aucune perte en constituants valorisables. Un autre avantage peut être la simplicité de mise en oeuvre de l'invention. L'exemple2 en particulier illustre cet aspect de l'invention.

Il peut paraître paradoxal de réintroduire les impuretés issues du réservoir dans le gaz d'alimentation de ce même réservoir mais en pratique de nombreuses applications s'accommodent très bien de cet état de fait. Là aussi, les exemples illustreront ce point.

La figure 3.a représente schématiquement une unité de production, de stockage, de transport et de distribution d'hydrogène. De l'hydrogène de pureté 99,99% molaire est produit dans l'unité 10. Cette unité 10 comprend entre autres un reformage à la vapeur de gaz naturel qui crée les molécules H2 et un PSA qui épure cet hydrogène jusqu'à la pureté désirée. Il s'agit là d'unités très classiques bien connues de l'homme de l'art. Suivant la capacité de production demandée, la localisation géographique, les conditions économiques, on pourrait avoir d'autres unités pour produire les molécules d'hydrogène (reformage de propane, de méthanol, électrolyse...). L'essentiel de cet hydrogène épuré 1 est injecté dans un stockage souterrain 20 créé dans un dépôt de sel. Le volume stocké correspond à plusieurs semaines de consommation. Une fraction 3 de l'hydrogène est extraite du réservoir et alimente un pipe 4 qui dessert plusieurs consommateurs situés à des dizaines voire des centaines de kilomètres (4.1, 4.2, 4.3, 4.4...). Certains de ces clients ont besoin d'une pureté extrêmement élevée (99.9999 % mole) et une épuration secondaire est alors implantée juste à l'amont du lieu de consommation. Il s'agit alors par exemple d'hydrogène utilisé pour la fabrication de composants électroniques. L'épuration secondaire se fait alors généralement par adsorption cryogénique au niveau de température de l'azote liquide.

En fonctionnement normal, une petite quantité de l'hydrogène 2 pur, de l'ordre de 10% est dirigée directement dans un réseau local. La pureté requise est en accord avec celle de la production.

Le réservoir 20 a essentiellement 2 fonctions. La première est pouvoir moyenner la production sur une longue période de consommation. En effet chez les différents utilisateurs, les besoins en hydrogène sont loin d'être constants : certains procédés utilisateurs de H2 sont discontinus, certains fonctionnent périodiquement à charge réduite ou à charge poussée...Malgré toutes ces variations, il est alors possible de faire fonctionner l'unité 10 de façon régulière optimisant ainsi la production. Il est également possible de la faire fonctionner quelques semaines au débit nominal, c'est-à-dire dans les meilleures conditions possibles et de l'arrêter totalement une semaine. On peut également profiter des tarifs préférentiels pour l'énergie et arrêter ou diminuer momentanément la production sur demande faisant ainsi des économies appréciables sur le coût de l'énergie.

L'autre fonction du réservoir 20 est d'avoir un volume gazeux important en réserve pour pallier un arrêt imprévu ou programmé de l'unité 10 tout en continuant d'alimenter les clients en hydrogène.

Le réservoir 20 est essentiellement étanche du fait de la géologie locale mais quelques impuretés passent de la paroi au gaz. Il va s'agir essentiellement d'humidité, éventuellement de traces d'HCL, d'H2S, de CO2. Suivant la nature géologique du réservoir, on peut trouver des traces d'hydrocarbures divers. Ces impuretés additionnelles en faible quantité sont généralement acceptables par la majorité des utilisateurs, la pureté du produit 1 étant généralement au-delà des spécifications requises pour l'utilisation directe de l'hydrogène. Dans le cas inverse, c'est-à-dire de besoin en hydrogène très pur, c'est généralement l'épuration complémentaire 40, déjà été prévue, qui est capable de retirer les impuretés additionnelles.

Ces impuretés peuvent être par contre gênantes pour le réseau local 2 alimenté habituellement directement en hydrogène épuré et qui verrait alors périodiquement des impuretés supplémentaires. La solution classique est alors d'utiliser une unité d'épuration additionnelle 30 pour traiter le flux gazeux 5 extrait directement du réservoir. Cette unité (30 sur la FIG 3.a) qui n'est utilisée qu'occasionnellement ne sera pas de type cryogénique car ces unités, si elles sont très sûres au niveau du fonctionnement, sont d'un investissement élevé, requièrent des utilités particulières (azote liquide) et se prêtent mal à un fonctionnement discontinu. La solution de base sera une unité d'épuration par adsorption, de type TSA (Température Swing Adsorption= unité d'adsorption à modulation de température) dimensionnée pour retenir les impuretés et produire un flux d'hydrogène à la spécification requise 6. La régénération de l'adsorbant peut être plus ou moins complexe selon que l'on souhaite- ou pas- limiter les pertes en hydrogène dans le débit de purge 7. Une telle unité va comporter 2 ou 3 adsorbeurs, un réchauffeur électrique ou à vapeur, et un skid de vannes pour permettre le déroulement du cycle.

Dans la solution selon l'invention (Fig. 3.b), on intègre juste une masse adsorbante 50 sur le trajet du fluide 1 à l'amont de son entrée dans le réservoir. Cette masse longuement balayée en marche normale par le flux d'hydrogène sortant ici du PSA va être saturé par les impuretés résiduelles présentes dans l'hydrogène épuré (traces de CO, de CH4, de N2) mais va être totalement exempte d'eau, d'HCL, etc..... Lors de l'arrêt de l'unité de production 10, le réseau 4 va être normalement alimenté à partir du réservoir. Le débit utilisé localement va lui également être extrait du réservoir 20 et va passer dans le sens inverse du flux 1 à travers la masse adsorbante 50. Cette masse sera dimensionnée en fonction des impuretés présentes, des quantités acceptables et de la durée prévue du fonctionnement (durée de la période d'arrêt pour entretien par exemple...). La quantité d'adsorbant sera généralement supérieure à la quantité requise dans la solution de base décrite plus haut, mais la simplicité du fonctionnement, l'absence d'équipements annexes et le fait qu'il n'y ait aucune perte de matière font que cette dernière solution est d'un coût global bien moindre que la solution classique. Elle est également plus sûre car elle ne nécessite pas une succession de phases d'adsorption et désorption pour fonctionner.

La régénération de la masse adsorbante se fait naturellement lorsque l'unité 10 est remise en production. Le flux 1 traverse alors à contre-courant le ou les différents lits d'adsorbants (zéolite, alumine activée, gel de silice...) et entraîne les impuretés amenées par le flux 5. La température restant approximativement constante et proche de l'ambiante pendant l'adsorption et la désorption, il suffit théoriquement que la quantité volumique (m³ réels) du flux 1 envoyé au réservoir soit supérieur à celle du flux 5 pour que la régénération puisse s'effectuer. En pratique, on dispose d'un volume de gaz largement supérieur et la masse adsorbante sera totalement régénérée et prête pour l'épuration suivante du flux 5 ; On notera qu'une température du flux 5 inférieure à celle du flux 1 favorisera à la fois l'arrêt des impuretés et leur régénération. A l'inverse, une pression plus basse du flux 5 peut nécessiter une masse adsorbante plus importante. Ces points sont connus de l'homme de l'art qui n'aura pas de mal à déterminer les paramètres nécessaires à un bon fonctionnement (type d'adsorbant, masse utile...) et il n'y a pas lieu de s'étendre ici plus longuement sur le dimensionnement précis de l'épuration 50.

Le second exemple concerne une unité de production d'oxygène à partir d'air atmosphérique par adsorption. Plus précisément, il s'agit d'une unité de type VSA dans laquelle l'oxygène est produit à une pression voisine de la pression atmosphérique (1.10 bar abs) dite pression haute du cycle et la régénération s'effectue par tirage au vide une pression minimale, dite pression basse, de l'ordre de 0.35 bar abs. Il existe de nombreux cycles pour ce type d'unités VSA se différentiant par le nombre d'adsorbeurs, le nombre de capacités de stockage utilisées et par le type et/ou l'enchaînement des sous étapes (équilibrages, décompression, élution, recompression...). Il n'y a pas lieu ici de rentrer dans le détail de l'unité en question. Seules quelques caractéristiques ont un intérêt vis-à-vis de l'invention.

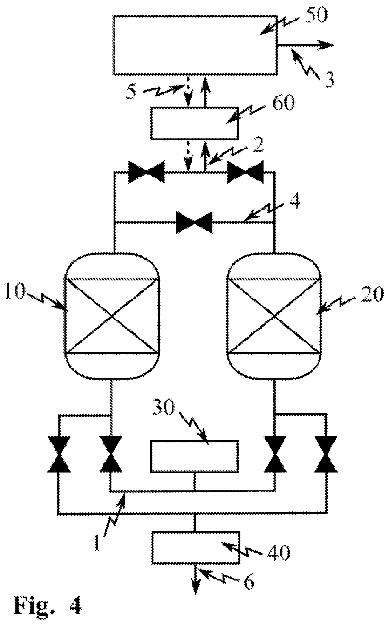

La figure Fig. 4 schématise une telle unité de production d'oxygène. Elle comporte 2 adsorbeurs repérée 10 et 20 qui fonctionnent en décalage de phase. L'air 1 est introduit dans le système par l'intermédiaire du compresseur 30, en pratique ici du type ventilateur. Le vide est fait au moyen de la pompe à vide 40 qui extrait un résiduaire riche en azote 6.

L'oxygène produit par un adsorbeur, 10 par exemple, et qui n'est pas immédiatement utilisé pour le la régénération de l'autre adsorbeur 20 - flux 4 sur le schéma- est envoyé (flux gazeux A qui correspond ici au flux gazeux 2) au stockage 50 après avoir traversé l'unité d'épuration 60. Du stockage 50 on extrait de façon continue et à débit constant le flux gazeux C (flux gazeux 3 dans la figure) qui constitue la production de l'unité. La production d'oxygène sortie de l'adsorbeur n'est pas continue et s'effectue plutôt sur seulement la moitié de la phase dite d'adsorption. En outre, comme précisé ci-dessus, une portion de cet oxygène est directement prélevée pour participer à la régénération de l'autre adsorbeur. Une capacité tampon 50 (réservoir de stockage) est donc nécessaire pour stocker l'oxygène issu d'un adsorbeur afin d'assurer une production constante. L'oxygène étant produit à une pression à peine supérieure à la pression atmosphérique dans l'exemple retenu, une solution très intéressante pour le réservoir de stockage 50 est d'utiliser un gazomètre. La pression du gaz va alors rester constante, par exemple 1.050 bar abs et c'est le volume du réservoir qui va naturellement évoluer durant le déroulement du cycle. Ce type de gazomètre est classique et peu coûteux. Cependant, l'enveloppe étant faite de polymère et ce dernier étant légèrement perméable à l'eau, un peu d'humidité atmosphérique va venir polluer l'oxygène très sec produit par adsorption. Dans la quasi-totalité des applications, ces traces d'humidité n'ont aucun impact sur le procédé aval et sont parfaitement acceptables. Cependant dans le cycle utilisé ici, il est nécessaire de finir de recomprimer l'adsorbeur en cours de régénération par de l'oxygène durant une étape où l'autre adsorbeur ne produit plus cet oxygène. Il convient donc d'utiliser une fraction de l'oxygène (flux 5 = flux gazeux B) stocké dans le réservoir de stockage 50 à cette fin. On a vu que l'oxygène du stockage contenait des traces d'humidité, de l'ordre de la ppm ou de quelques ppm. Ces quantités sont infimes mais pourtant inacceptables pour le VSA. En effet, cette eau va se piéger en tête d'adsorbeur sur la zéolite qui sépare l'azote de l'oxygène à chaque cycle puis après accumulation, avoir tendance à migrer vers l'entrée de l'adsorbeur en suivant la désorption de l'azote.

L'humidité est un poison pour les zéolites, tout particulièrement pour les LiLSX développées pour cette application, très performantes mais aussi extrêmement sensibles à l'eau. Ce risque est tel que les unités de production d'oxygène par adsorption fonctionnant à pression atmosphérique (de type V.S.A. selon l'appellation courante) comportent généralement plus de deux adsorbeurs afin de pouvoir rendre la production d'oxygène à la sortie des adsorbeurs continue et d'éviter ainsi un stockage en basse pression.

Il est apparu qu'en plaçant une simple masse adsorbante 60 à l'amont du réservoir de stockage (dans le sens production), on résolvait de façon certaine le problème de l'humidité. Le flux gazeux A (flux 2) traverse la masse adsorbante à contre-courant avant d'être stocké dans le réservoir de stockage 50. Puis le flux gazeux B (flux 5) pollué par les impuretés du réservoir de stockage traverse à co-courant la masse adsorbante. Le gaz entrant dans le réservoir de stockage et le gaz extrait pour la recompression sont quasiment à la même pression et à la même température. La quantité de gaz allant vers le réservoir de stockage est largement supérieure à la quantité de gaz que l'on extrait pour la recompression. Elle correspond en effet à la production augmentée du volume de la recompression. La masse adsorbante se régénère donc à chaque phase sans problème. Quant à l'humidité, elle est évacuée naturellement avec la production 3 (flux gazeux C).

Dans d'autres cycles, l'oxygène extrait de la capacité peut également servir à effectuer la totalité ou une partie de l'élution de l'adsorbant en fin de pompage sous vide. Le problème est identique.

Il convient de noter qu'une masse adsorbante placée juste à l'amont du réservoir selon l'invention n'a pas du tout le même effet qu'une masse qui serait placée en tête de chaque adsorbeur. En effet pour qu'un adsorbeur puisse continument produire de l'oxygène, il convient que la puissance de régénération entraîne les impuretés, essentiellement l'azote - vers l'entrée de l'adsorbeur. C'est le rôle de la pompe à vide de créer une puissance de régénération de la sortie vers l'entrée. Autrement dit, si la masse adsorbante était placée en tête d'adsorbeur, il n'y aurait pas possibilité d'entraîner la totalité de l'eau dans la production comme c'est le cas avec le principe de l'invention.

## Revendications

1. Procédé de production d'un flux gazeux épuré B' mettant en oeuvre une unité de production d'un flux gazeux et un réservoir de stockage R comprenant des impuretés I, comprenant les étapes suivantes :
a) production d'un flux gazeux A au moyen de l'unité de production,
b) stockage d'au moins une partie du flux gazeux A dans le réservoir R,
c) extraction du réservoir R d'un flux gazeux B correspondant à au moins une partie du flux A polluée par les impuretés I issues du réservoir de stockage R,
d) épuration du flux gazeux B par transfert d'au moins une partie des impuretés I comprises dans le flux gazeux B dans le flux gazeux A, et
e) récupération en sortie de l'épuration d'un flux gazeux épuré B',
le procédé comprenant une étape d'extraction d'un flux gazeux C, du réservoir de stockage R.

2. Procédé de production selon l'une la revendication 1, **caractérisé en ce que** le réservoir de stockage R est un réservoir de stockage aérien ou un réservoir de stockage souterrain, naturel ou artificiel.

3. Procédé de production selon la revendication 2, **caractérisé en ce que** le réservoir de stockage aérien est un réservoir à volume constant et pression variable ou un réservoir à volume variable et pression constante.

4. Procédé de production selon l'une des revendications 1 à 3, **caractérisé en ce que** les impuretés I comprises dans le réservoir de stockage R sont situées sur les parois dudit réservoir et/ou dans le système d'étanchéité dudit réservoir et/ou dans des équipements complémentaires associés au réservoir.

5. Procédé de production selon l'une des revendications 1 à 4, **caractérisé en ce que** l'épuration de l'étape d) est réalisée par adsorption, absorption ou perméation.

6. Procédé de production selon l'une des revendications 1 à 5, **caractérisé en ce que** l'épuration de l'étape d) est réalisée par adsorption au moyen d'au moins une masse adsorbante et comprend deux sous-étapes :
- une première sous-étape i) comprenant le passage à co-courant du flux gazeux B à travers la masse adsorbante de manière à éliminer au moins une partie des impuretés I comprises dans le flux gazeux B, et
- une deuxième sous-étape ii) comprenant le passage à contre-courant du flux gazeux A à travers la masse adsorbante issue de la première sous-étape i) de manière à désorber au moins une partie des impuretés I.

7. Procédé de production selon la revendication 6, **caractérisé en ce que** la différence de température d'entrée des flux gazeux A et B dans la masse absorbante est inférieure à 50°C, préférentiellement inférieure à 20°C.

8. Procédé de production selon l'une des revendications 6 ou 7, **caractérisé en ce que** le débit volumique du flux gazeux B représente moins de 90%, préférentiellement moins de 65%, encore plus préférentiellement moins de 50% du débit volumique du flux gazeux A.

9. Procédé de production selon l'une des revendications 6 à 8, **caractérisé en ce que** :
- une seule masse adsorbante est utilisée à l'étape d) et subit alternativement le passage des flux gazeux A et B ; et
- le flux gazeux B est discontinu de manière à n'avoir aucune extraction d'un flux gazeux B du réservoir R lorsque la masse adsorbante subit le passage du flux gazeux A.

10. Procédé de production selon la revendication 9, **caractérisé en ce que** le flux gazeux A est discontinu de manière à n'avoir aucun stockage du flux gazeux A dans le réservoir R lorsque la masse adsorbante subit le passage du flux gazeux B.

11. Procédé de production selon l'une des revendications 1 à 10, **caractérisé en ce que** le flux gazeux A comprend au moins 50% d'hydrogène ou d'hélium et le réservoir R est un réservoir de stockage aérien à volume constant ou un réservoir de stockage souterrain.

12. Procédé de production selon la revendication 1, **caractérisé en ce que** :
- le flux gazeux A comprend au moins 50% d'oxygène issu d'au moins un adsorbeur d'une unité de séparation des gaz de l'air par adsorption ;
- le flux gazeux B permet de régénérer, préférentiellement de recomprimer au moins un adsorbeur de ladite unité de séparation des gaz de l'air ;
- le flux gazeux C constitue le flux de production enrichi en oxygène de ladite unité de séparation des gaz de l'air et comprend les impuretés I issues du réservoir de stockage.

13. Procédé de production selon la revendication 12, **caractérisé en ce que** l'épuration de l'étape d) est réalisée par adsorption au moyen d'une masse adsorbante et comprend deux sous-étapes :
- une première sous-étape i) comprenant le passage à co-courant du flux gazeux B à travers la masse adsorbante de manière à éliminer au moins une partie des impuretés I comprises dans le flux gazeux B, et
- une deuxième sous-étape ii) comprenant le passage à contre-courant du flux gazeux A à travers la masse adsorbante issue de la première sous-étape i) de manière à désorber au moins une partie des impuretés I,
avec la masse adsorbante comprenant de l'alumine activée et/ou du gel de silice et/ou une zéolite.

14. Procédé de production selon l'une des revendications 12 ou 13, **caractérisé en ce que** les impuretés I sont essentiellement de l'eau et/ou du dioxyde de carbone.

## Patentansprüche

1. Verfahren zur Herstellung eines gereinigten Gasstroms B' durch Betreiben einer Produktionsanlage für einen Gasstrom und eines Verunreinigungen I umfassenden Speichertanks R, das die folgenden Schritte umfasst:
a) Herstellung eines Gasstroms A mithilfe der Produktionsanlage,
b) Speichern mindestens eines Teils des Gasstroms A im Tank R,
c) Extrahieren eines Gasstroms B, entsprechend mindestens einem durch aus dem Speichertank R stammende Verunreinigungen I verschmutzten Teil des Gasstroms A, aus dem Tank R,
d) Reinigung des Gasstroms B mittels Transfer von mindestens einem Teil der im Gasstrom B enthaltenen Verunreinigungen I in den Gasstrom A, und
e) Rückgewinnen eines gereinigten Gasstroms B' am Ende der Reinigung,
wobei das Verfahren einen Schritt des Extrahierens eines Gasstroms C aus dem Speichertank R umfasst.

2. Herstellungsverfahren nach Anspruch 1, **dadurch gekennzeichnet, dass** der Speichertank R ein oberirdischer Speichertank oder ein unterirdischer Speichertank, jeweils von natürlicher oder künstlicher Beschaffenheit, ist.

3. Herstellungsverfahren nach Anspruch 2, **dadurch gekennzeichnet, dass** der oberirdische Speichertank ein Tank mit konstantem Volumen und variablem Druck oder ein Tank mit variablem Volumen und konstantem Druck ist.

4. Herstellungsverfahren nach einem der Ansprüche 1 bis 3, **dadurch gekennzeichnet, dass** die im Speichertank R enthaltenen Verunreinigungen sich auf den Wänden des Tanks und/oder im Dichtungssystem des Tanks und/oder in mit dem Tank verbundenen Zusatzausstattungen befinden.

5. Herstellungsverfahren nach einem der Ansprüche 1 bis 4, **dadurch gekennzeichnet, dass** die Reinigung unter Schritt d) durch Adsorption, Absorption oder Permeation erfolgt.

6. Herstellungsverfahren nach einem der Ansprüche 1 bis 5, **dadurch gekennzeichnet, dass** die Reinigung unter Schritt d) durch Adsorption mithilfe mindestens einer adsorbierenden Masse erfolgt und zwei Unterschritte umfasst:
- einen ersten Unterschritt i), umfassend das Durchleiten des Gasstroms B im Parallelstromprinzip durch die adsorbierende Masse, um so mindestens einen Teil der im Gasstrom B enthaltenen Verunreinigungen I zu eliminieren, und
- einen zweiten Unterschritt ii), umfassend das Durchleiten des Gasstroms A im Gegenstromprinzip durch die adsorbierende Masse, die aus dem ersten Unterschritt i) resultiert, um so mindestens einen Teil der Verunreinigungen I zu desorbieren.

7. Herstellungsverfahren nach Anspruch 6, **dadurch gekennzeichnet, dass** der Unterschied der Temperatur der Gasströme A und B beim Eintritt in die adsorbierende Masse kleiner als 50 °C, vorzugsweise kleiner als 20 °C ist.

8. Herstellungsverfahren nach einem der Ansprüche 6 oder 7, **dadurch gekennzeichnet, dass** die Volumenrate des Gasstroms B weniger als 90 %, vorzugsweise weniger als 65 %, stärker bevorzugt weniger als 50 % der Volumenrate des Gasstroms A repräsentiert.

9. Herstellungsverfahren nach einem der Ansprüche 6 bis 8, **dadurch gekennzeichnet, dass**:
- eine einzige adsorbierende Masse im Schritt d) verwendet wird und abwechselnd dem Durchleiten der Gasströme A und B unterzogen wird; und
- der Gasstrom B diskontinuierlich ist, so dass kein Extrahieren eines Gasstroms B aus dem Tank R stattfindet, während die adsorbierende Masse dem Durchleiten des Gasstroms A unterzogen wird.

10. Herstellungsverfahren nach Anspruch 9, **dadurch gekennzeichnet, dass** der Gasstrom A diskontinuierlich ist, so dass kein Speichern eines Gasstroms A im Tank R stattfindet, während die adsorbierende Masse dem Durchleiten des Gasstroms B unterzogen wird.

11. Herstellungsverfahren nach einem der Ansprüche 1 bis 10, **dadurch gekennzeichnet, dass** der Gasstrom A mindestens 50 % Wasserstoff oder Helium umfasst, und der Tank R ein überirdischer Speichertank mit konstantem Volumen oder ein unterirdischer Speichertank ist.

12. Herstellungsverfahren nach Anspruch 1, **dadurch gekennzeichnet, dass**:
- der Gasstrom A mindestens 50 % Sauerstoff, erhalten aus mindestens einem Adsorber einer Luft-Gastrennanlage mittels Adsorption, umfasst;
- der Gasstrom B das Regenerieren, vorzugsweise Rekomprimieren, mindestens eines Adsorbers der Luft-Gastrennanlage ermöglicht;
- der Gasstrom C den Produktionsstrom bildet, angereichert mit Sauerstoff aus der Luft-Gastrennanlage, und die aus dem Speichertank R stammenden Verunreinigungen I umfasst.

13. Herstellungsverfahren nach Anspruch 12, **dadurch gekennzeichnet, dass** die Reinigung unter Schritt d) durch Adsorption mithilfe einer adsorbierenden Masse erfolgt und zwei Unterschritte umfasst:
- einen ersten Unterschritt i), umfassend das Durchleiten des Gasstroms B im Parallelstromprinzip durch die adsorbierende Masse, um so mindestens einen Teil der im Gasstrom B enthaltenen Verunreinigungen I zu eliminieren, und
- einen zweiten Unterschritt ii), umfassend das Durchleiten des Gasstroms A im Gegenstromprinzip durch die adsorbierende Masse, die aus dem ersten Unterschritt i) resultiert, um so mindestens einen Teil der Verunreinigungen I zu desorbieren,
wobei die adsorbierende Masse aktiviertes Aluminium und/oder Kieselgel und/oder einen Zeolith umfasst.

14. Herstellungsverfahren nach einem der Ansprüche 12 oder 13, **dadurch gekennzeichnet, dass** es sich bei den Verunreinigungen I im Wesentlichen um Wasser und/oder Kohlendioxid handelt.

## Claims

1. Process for producing a purified gas stream B' using a unit for producing a gas stream and a storage reservoir R comprising impurities I, said process comprising the following steps:
a) production of a gas stream A by means of the production unit,
b) storage of at least a portion of the gas stream A in the reservoir R,
c) extraction, from the reservoir R, of a gas stream B corresponding to at least one portion of the stream A polluted by the impurities I from the storage reservoir R,
d) purification of the gas stream B by transfer of at least one portion of the impurities I contained in the gas stream B into the gas stream A, and
e) recovery of a purified gas stream B' at the output of the purification,
the process comprising a step of extraction of a gas stream C from the storage reservoir R.

2. Production process according to Claim 1, **characterized in that** the storage reservoir R is an above-ground storage reservoir or an underground storage reservoir, which is natural or artificial.

3. Production process according to Claim 2, **characterized in that** the above-ground storage reservoir is a constant volume and variable pressure reservoir or a variable volume and constant pressure reservoir.

4. Production process according to one of Claims 1 to 3, **characterized in that** the impurities I contained in the storage reservoir R are located on the walls of said reservoir and/or in the system for sealing said reservoir and/or in additional equipment associated with the reservoir.

5. Production process according to one of Claims 1 to 4, **characterized in that** the purification of step d) is carried out by adsorption, absorption or permeation.

6. Production process according to one of Claims 1 to 5, **characterized in that** the purification of step d) is carried out by adsorption by means of at least one adsorbent mass and comprises two substeps:
- a first substep i) comprising the co-current passage of the gas stream B through the adsorbent mass so as to remove at least one portion of the impurities I contained in the gas stream B, and
- a second substep ii) comprising the passage in counter-current mode of the gas stream A through the adsorbent mass resulting from the first substep i) so as to desorb at least one portion of the impurities I.

7. Production process according to Claim 6, **characterized in that** the difference in inlet temperature of the gas streams A and B in the absorbent mass is less than 50°C, preferentially less than 20°C.

8. Production process according to either of Claims 6 and 7, **characterized in that** the volume flow rate of the gas stream B represents less than 90%, preferentially less than 65%, even more preferentially less than 50% of the volume flow rate of the gas stream A.

9. Production process according to one of Claims 6 to 8, **characterized in that**:
- a single adsorbent mass is used in step d) and alternately undergoes passage of the gas streams A and B; and
- the gas stream B is batchwise so as to have no extraction of a gas stream B in the reservoir R when the adsorbent mass undergoes passage of the gas stream A.

10. Production process according to Claim 9, **characterized in that** the gas stream A is batchwise so as to have no storage of the gas stream A in the reservoir R when the adsorbent mass undergoes passage of the gas stream B.

11. Production process according to one of Claims 1 to 10, **characterized in that** the gas stream A comprises at least 50% hydrogen or helium and the reservoir R is an above-ground constant volume storage reservoir or an underground storage reservoir.

12. Production process according to Claim 1, **characterized in that**:
- the gas stream A comprises at least 50% of oxygen originating from at least one adsorber of a unit for separating gases from air by adsorption;
- the gas stream B makes it possible to regenerate, preferentially recompress, at least one adsorber of said unit for separating gases from air;
- the gas stream C constitutes the oxygen-enriched production stream of said unit for separating gases from air and comprises the impurities I from the storage reservoir.

13. Production process according to Claim 12, **characterized in that** the purification of step d) is carried out by adsorption by means of an adsorbent mass and comprises two substeps:
- a first substep i) comprising the co-current passage of the gas stream B through the adsorbent mass so as to remove at least one portion of the impurities I contained in the gas stream B, and
- a second substep ii) comprising the passage in counter-current mode of the gas stream A through the adsorbent mass resulting from the first substep i) so as to desorb at least one portion of the impurities I,
with the adsorbent mass comprising activated alumina and/or silica gel and/or a zeolite.

14. Production process according to either of Claims 12 and 13, **characterized in that** the impurities I are essentially water and/or carbon dioxide.
